# EUROPÄISCHE PATENTANMELDUNG

(11) **EP 3 629 601 A1**
(43) Veröffentlichungstag der Anmeldung: **01.04.2020**
(21) Anmeldenummer: 19190646.0
(22) Anmeldetag: 08.08.2019
(51) Int. Cl.: H04R 25/00

(54) **VERFAHREN ZUR VERARBEITUNG VON MIKROFONSIGNALEN IN EINEM HÖRSYSTEM SOWIE HÖRSYSTEM**

(30) Priorität: 27.09.2018 DE 102018216667
(71) Anmelder: Sivantos Pte. Ltd., Singapore 539775 (SG)
(72) Erfinder: LUGGER, Marko, 91365 Weilersbach (DE); KAMKAR-PARSI, Homayoun, 91058 Erlangen (DE); ARNOLD, Mirko, 89551 Königsbronn (DE); GIESE, Ulrich, 90765 Fürth (DE)
(74) Vertreter: FDST Patentanwälte

(57) **Zusammenfassung**

Die Erfindung betrifft ein Hörsystem (1), das ein in oder am Ohr eines Nutzers tragbares Hörinstrument (3) sowie ein Peripheriegerät oder ein auf einem Datenverarbeitungsgerät (15) lauffähiges Steuerprogramm (17) umfasst. Die Erfindung betrifft weiter ein Verfahren zur Verarbeitung eines Mikrofonsignals in einem solchen Hörsystem (1). Ein von dem Hörinstrument (3) erfasstes Mikrofonsignal wird auf Eigenstimmanteile des Nutzers untersucht und mittels einer Signalverarbeitung (11) des Hörinstruments (3) in Abhängigkeit vorgegebener Signalverarbeitungsparameter (p₁, p₂, p₃) verarbeitet. Bei Erkennung von Eigenstimmanteilen wird dabei ein erster Parametersatz (P_{OV}) der Signalverarbeitungsparameter (p₁, p₂, p₃) angewendet, während bei Nicht-Erkennung von Eigenstimmanteilen ein zweiter Parametersatz (P_{NOV}) der Signalverarbeitungsparameter (p₁, p₂, p₃) angewendet wird. Der erste Parametersatz (P_{OV}) ist hierbei von dem Nutzer über das Peripheriegerät (15) oder das Steuerprogramm (17) veränderbar, um die in dem Mikrofonsignal enthaltenen Eigenstimmanteile an eine von dem Nutzer gewünschte Wahrnehmung der eigenen Stimme anzupassen.

## Beschreibung

Die Erfindung betrifft ein Verfahren zur Verarbeitung von Mikrofonsignalen in einem Hörsystem, das ein in oder am Ohr eines Nutzers tragbares Hörinstrument umfasst. Weiter betrifft die Erfindung ein derartiges Hörsystem.

Als "Hörinstrument" wird allgemein ein elektronisches Gerät bezeichnet, das einen Umgebungsschall aufnimmt, signaltechnisch modifiziert und ein modifiziertes Schallsignal an das Gehör einer das Hörinstrument tragenden Person (nachfolgend als "Nutzer" oder "Träger" bezeichnet) abgibt.

Ein Hörinstrument, das zur Versorgung einer hörgeschädigten Person ausgebildet ist und das akustische Umgebungssignale derart verarbeitet, insbesondere verstärkt, dass die Hörschädigung ganz oder teilweise kompensiert wird, wird hier und im Folgenden als "Hörgerät" bezeichnet. Ein Hörgerät umfasst hierzu üblicherweise einen Eingangswandler, beispielsweise in Form eines Mikrofons, eine Signalverarbeitungseinheit mit einem Verstärker, sowie einen Ausgangswandler. Der Ausgangswandler ist in der Regel als Miniaturlautsprecher realisiert und wird auch als "Hörer" (Receiver) bezeichnet.

Zusätzlich zu klassischen Hörgeräten gibt es allerdings auch Hörinstrumente, die auf die Versorgung von Normalhörenden ausgerichtet sind, um das Gehör des jeweiligen Nutzers zu schützen oder um dessen Geräuschwahrnehmung (z.B. das Sprachverständnis in komplexen Geräuschumgebungen) für bestimmte Zwecke zu unterstützen. Solche Hörinstrumente sind oft ähnlich aufgebaut wie Hörgeräte und umfassen insbesondere auch die oben genannten Komponenten Eingangswandler, Signalverarbeitung und Ausgangswandler.

Um den zahlreichen individuellen Bedürfnissen entgegenzukommen, werden unterschiedliche Bauformen von Hörinstrumenten angeboten. Bei sogenannten BTE-Hörinstrumenten (Behind-The-Ear, auch Hinter-dem-Ohr, kurz HdO) wird ein mit dem Eingangswandler, der Signalverarbeitung und einer Batterie bestücktes Gehäuse hinter dem Ohr (zwischen Schädel und Ohrmuschel) getragen. Je nach Ausgestaltung kann der Hörer entweder in dem Hörgerätegehäuse oder direkt im Gehörgang des Nutzers (sogenannte Ex-Hörer-Hörinstrumente oder Receiver-in-the-Canal-, kurz RIC-Hörinstrumente) angeordnet sein. In dem erstgenannten Fall leitet ein flexibler, auch als "Tube" bezeichneter Schallschlauch die akustischen Ausgabesignale des Hörers vom Gehäuse zum Gehörgang (Schlauch- Hörinstrumente). Bei sogenannten ITE- Hörinstrumenten (In-the-Ear, auch In-dem-Ohr, kurz IdO) wird ein Gehäuse, welches sämtliche funktionale Komponenten einschließlich des Mikrofons und des Hörers enthält, zumindest teilweise im Gehörgang getragen. Sogenannte CIC-Hörinstrumente (Completely-in-Canal) sind den ITE-Hörinstrumenten ähnlich, werden jedoch vollständig im Gehörgang getragen.

Der Begriff "Hörsystem" bezeichnet hier und im Folgenden ein Ensemble von Geräten und gegebenenfalls anderen Strukturen, das die für den Normalbetrieb des Hörinstruments erforderlichen Funktionen bereitstellt und somit eine funktionale Einheit bildet. Ein solches Hörsystem kann im einfachsten Fall durch ein einzelnes Stand-Alone-Hörinstrument gebildet sein. In der Regel besteht ein Hörsystem aber aus mehreren Geräten. Beispielsweise kann das Hörsystem zusätzlich zu einem Hörinstrument ein weiteres Hörinstrument für das andere Ohr des Nutzers und/oder ein Peripheriegerät (z.B. eine Fernbedienung oder ein Programmierungsgerät zur Programmierung des Hörinstruments) umfassen. Anstelle eines Peripheriegeräts umfassen moderne Hörsysteme zunehmend häufig ein Steuerprogramm (also eine Software-Applikation zur Steuerung und gegebenenfalls Programmierung des Hörinstruments, insbesondere in Form einer sogenannten "App"), das auf einem Datenverarbeitungsgerät (z.B. einem Computer oder einem mobilen Kommunikationsgerät, insbesondere Smartphone) lauffähig installiert oder installierbar ist. Ein solches Steuerprogramm eines Hörsystems ist nachfolgend im Sinne einer prägnanten Bezeichnung auch als "Hör-Applikation" bezeichnet. Bei dem Datenverarbeitungsgerät handelt es sich dabei in der Regel um ein Mehrzweckgerät, dass nicht speziell oder selektiv für die Zusammenwirkung mit dem Hörinstrument ausgebildet ist und meist auch unabhängig von dem Hörinstrument hergestellt und vertrieben wird. Das Datenverarbeitungsgerät ist somit in der Regel selbst kein Bestandteil des Hörsystems, sondern wird von letzerem lediglich als Ressource für Rechenleistung, Speicherkapazität und gegebenenfalls Aktorik und/oder Sensorik genutzt.

Ein wichtiger Faktor für die Akzeptanz und die dauerhafte Zufriedenheit eines (insbesondere hörgeschädigten) Nutzers mit einem Hörinstrument ist die subjektive Wahrnehmung der eigenen Stimme. Allerdings wird auch bei hochwertigen modernen Hörinstrumenten gerade die durch das Hörinstrument verarbeitete eigene Stimme häufig als unnatürlich oder unangenehm empfunden, was der anfänglichen Akzeptanz von Hörinstrumenten abträglich ist und vor allem unerfahrenen Nutzern die Gewöhnung an das Hörinstrument erschwert. Weiter erschwerend kommt hinzu, dass eine in Hinblick auf die allgemeine Geräuschwahrnehmung und insbesondere die Sprachverständlichkeit optimale Einstellung der Signalverarbeitung im Hörinstrument häufig zulasten der Qualität der Klangwahrnehmung der eigenen Stimme geht.

In Hinblick auf dieses Problem wurde bei der Anpassung ("Fitting") eines Hörinstruments an den individuellen Nutzer bisher meistens versucht, einen möglichst guten Kompromiss zwischen der Qualität der Eigenstimmwahrnehmung und der Sprachverständlichkeit (also der Verständlichkeit der von fremden Sprechern gesprochenen Sprache) zu finden. Moderne Hörinstrumente mit Eigenstimmerkennung (Own Voice Detection) bieten alternativ häufig die Möglichkeit, Schallsignale mit Eigenstimmanteilen und Schallsignale ohne Eigenstimmanteil auf unterschiedliche Weise zu bearbeiten. Bei solchen Hörinstrumenten kann die Signalverarbeitung daher vorteilhafterweise unabhängig sowohl in Hinblick auf gute Sprachverständlichkeit als auch in Hinblick auf einen angenehmen Klang der eigenen Stimme optimiert werden.

Der Nutzen beider Ansätze wird aber vor allem durch den Umstand begrenzt, dass die Eigenstimmwahrnehmung bei vielen Nutzern zeitlichen Schwankungen und Trends unterliegt, die für jeden Nutzer - abhängig von der Persönlichkeit und physiologischen Eigenschaften des Nutzers - individuell verschieden sind und die daher im Zuge eines gewöhnlichen Fitting-Prozesses nicht berücksichtigt werden können. Insbesondere wird das Fitting gewöhnlich abseits des täglichen Umfelds des Nutzers durch einen Audiologen vorgenommen und lässt daher schon von dem damit verbundenen Aufwand her keine häufigen oder kurzfristigen Reaktionen zu.

Der Erfindung liegt die Aufgabe zugrunde, bei einem Hörsystem und einem Verfahren zur Verarbeitung von Mikrofonsignalen in einem solchen eine verbesserte Eigenstimmwahrnehmung zu ermöglichen.

Bezüglich eines Verfahrens zur Verarbeitung von Mikrofonsignalen in einem Hörsystem der eingangsgenannten Art wird diese Aufgabe erfindungsgemäß gelöst durch die Merkmale des Anspruchs 1. Bezüglich eines solchen Hörsystems wird die Aufgabe erfindungsgemäß gelöst durch die Merkmale des Anspruchs 6. Vorteilhafte Ausgestaltungen der Erfindung sind in den Unteransprüchen und der nachfolgenden Beschreibung dargelegt.

Das erfindungsgemäße Verfahren wird zur Verarbeitung von Mikrofonsignalen in einem Hörsystem eingesetzt, das ein in oder am Ohr eines Nutzers tragbares Hörinstrument sowie ein Peripheriegerät oder ein auf einem Datenverarbeitungsgerät lauffähiges Steuerprogramm (also eine "Hör-Applikation") umfasst. Hierbei wird das Mikrofonsignal von dem Hörinstrument erfasst und mittels einer Signalverarbeitung in Abhängigkeit vorgegebener (Signalverarbeitungs-)Parameter verarbeitet. Das erfasste Mikrofonsignal wird dabei automatisch auf Eigenstimmanteile des Nutzers untersucht. Je nachdem, ob Eigenstimmanteile des Nutzers erkannt werden oder nicht, wird das Mikrofonsignal nach Maßgabe zweier verschiedener Parametersätze verarbeitet. So kommt bei und während der Erkennung von Eigenstimmanteilen ein erster Parametersatz der Signalverarbeitungsparameter zum Einsatz, während bei und während der Nicht-Erkennung von Eigenstimmanteilen ein zweiter Parametersatz der Signalverarbeitungsparameter angewendet wird.

Erfindungsgemäß ist der für die Verarbeitung von Eigenstimmanteilen bestimmte erste Parametersatz von dem Nutzer über das Peripheriegerät oder das Steuerprogramm veränderbar, um die in dem Mikrofonsignal enthaltenen Eigenstimmanteile an eine von dem Nutzer gewünschte Wahrnehmung der eigenen Stimme anzupassen.

Das Verfahren ermöglicht es dem Nutzer somit, den Klang seiner eigenen Stimme flexibel und nach Bedarf so anzupassen, dass der Klang der eigenen Stimme von Ihm selbst als angenehm empfunden wird. Der Nutzer kann somit selbst auf zeitliche Änderungen seiner Sprachwahrnehmung reagieren, ohne hierfür die Hilfe eines Audiologen in Anspruch nehmen zu müssen. Diese Änderungen können mithin schnell und unkompliziert vorgenommen werden. Die von dem Nutzer an dem ersten Parametersatz vorgenommenen Änderungen wirken dabei vorteilhafterweise selektiv auf Mikrofonsignale mit Eigenstimmanteilen. Die allgemeine Geräuschwahrnehmung und insbesondere die durch das Hörinstrument vermittelte Sprachverständlichkeit bleiben somit durch die von dem Nutzer an dem ersten Parametersatz vornehmbaren Änderungen unangetastet. Hierdurch wird ausgeschlossen, dass der Nutzer die Wirksamkeit des Hörinstruments hinsichtlich der allgemeinen Geräuschwahrnehmung (insbesondere ungewollt) durch kontraproduktive Parameteränderungen verschlechtert.

Als "Parametersatz" wird allgemein ein Datensatz bezeichnet, der für jeden Signalverarbeitungsparameter oder zumindest ein Subset mehrerer ausgewählter Signalverarbeitungsparameter jeweils einen Wert enthält. Der erste Parametersatz und der zweite Parametersatz stellen dabei verschiedene, aber gleichartige Datenstrukturen dar, die unabhängig voneinander in dem Hörsystem gespeichert und verarbeitet werden können. Insbesondere kann der jeweilige Inhalt der beiden Parametersätze unabhängig voneinander festgelegt und geändert werden. In der Regel sind der erste Parametersatz und der zweite Parametersatz dabei inhaltlich unterschiedlich, d.h. sie weisen für mindestens einen der Signalverarbeitungsparameter einen unterschiedlichen Wert auf.

Anstelle eines einzigen zweiten Parametersatzes können im Rahmen der Erfindung in Zeiträumen ohne Eigenstimmanteil auch mehrere zweite Parametersätze eingesetzt werden, um die Funktion der Signalverarbeitung an unterschiedliche klassifizierte Hörsituationen (beispielsweise Musik, Sprache fremder Sprecher, oder ähnliches) anzupassen.

Der Begriff "Signalverarbeitungsparameter" beschreibt allgemein eine Größe, die eine bestimmte Funktion der Signalverarbeitung einstellt (also in qualitativer und/oder quantitativer Weise näher bestimmt). Beispiele für solche Signalverarbeitungsparameter sind insbesondere
- ein Stellparameter für die Stärke einer Rauschunterdrückung,
- ein Gesamtverstärkungsparameter, mit dem sich die Lautstärke des von dem Hörinstrument ausgegebenen Schallsignals insgesamt einstellen lässt, sowie
- frequenzselektive Verstärkungsfaktoren für eine Mehrzahl von Frequenzbändern.

In einer bevorzugten Ausgestaltung der Erfindung umfasst der erste Parametersatz einen Wert für mindestens einen im Folgenden genannten Signalverarbeitungsparameter:
- einen Gesamtverstärkungsparameter, also einen Parameter zur Anpassung einer frequenzunabhängige Verstärkung des Mikrofonsignals und/oder einen Parameter zur Anpassung einer Kennlinie einer dynamischen Kompression, (wobei dieser Parameter beispielsweise die Lage eines Kniepunkts oder mehrerer Kniepunkte der Kompressionskennlinie wiedergibt) die Werte dieser Parameter können von dem Nutzer geändert werden, um die wahrgenommene Lautstärke (Loudness) der eigenen Stimme anzupassen,
- eine Anzahl von frequenzspezifischen Verstärkungsfaktoren für verschiedene Frequenzanteile des Mikrofonsignals (beispielsweise drei Verstärkungsfaktoren für tiefe, mittlere und hohe Frequenzen, die nach Art eines Equalizers unabhängig einstellbar sind) und/oder einen Parameter, mit dem die Verstärkung von hohen und tiefen Frequenzen relativ zueinander änderbare ist (spectral balance); die Werte dieser Parameter können von dem Nutzer geändert werden, um die wahrgenommene Frequenzverteilung der eigenen Stimme anzupassen,
- einen Parameter (nachfolgend "Härte-Parameter"), durch dessen Wert der Nutzer die wahrgenommene eigene Stimme in Hinblick auf die empfundene "Härte" oder "Weichheit" des Klangs anpassen kann; dieser Parameter beeinflusst beispielsweise Zeitkonstanten und/oder die Stärke der dynamischen Kompression; der funktionale Zusammenhang zwischen dem nutzerseitig einstellbaren Härte-Parameter und den Zeitkonstanten bzw. der Stärke der dynamischen Kompression ist dabei vorzugsweise derart festgelegt, dass die Zeitkonstanten der dynamischen Kompression umso größer eingestellt werden und/oder dass die Stärke der dynamischen Kompression umso mehr erniedrigt wird, je härter die eigene Stimme nach Maßgabe des Härte-Parameters klingen soll (ein harter Klang der eigenen Stimme wird dabei dadurch verursacht, dass die Kompression mit vergleichsweise großer Verzögerung und/oder nur geringer Stärke angewendet wird; ein weicher Klang der eigenen Stimme wird dagegen durch eine starke und/oder mit geringer Verzögerung auftretende Kompression erzeugt); der Zusammenhang zwischen dem Härte-Parameter und den Zeitkonstanten bzw. der Stärke der dynamischen Kompression wird optional zusätzlich in Abhängigkeit des Pegels der eigenen Stimme variiert.

Vorzugsweise sind mehrere der vorstehend genannten Signalverarbeitungsparameter von dem Nutzer einstellbar, so dass der Nutzer den Klang der eigenen Stimme in einem mehrdimensionalen Parameterraum variieren kann. In vorteilhaften Ausführungen der Erfindung sind die diesem Parameterraum aufspannenden Signalverarbeitungsparameter so gewählt, dass klanglich redundante Einstellungen vermieden werden, dass also die eigene Stimme an jedem auswählbaren Punkt des Parameterraums anders klingt.

Zur Einstellung eines jeden änderbaren Signalverarbeitungsparameters des ersten Parametersatzes wird dem Nutzer im Rahmen des Hörsystems ein entsprechender Befehlsgeber, z.B. in Form eines Schiebereglers (Slider) oder Drehknopfes zur Verfügung gestellt. Sofern die Signalverarbeitungsparameter des ersten Parametersatzes über ein Peripheriegerät des Hörsystems einstellbar sind, kann der oder jeder Befehlsgeber im Rahmen der Erfindung durch ein elektromechanisches Bauteil gebildet sein. Insbesondere bei Ausführungsformen der Erfindung, bei denen die Signalverarbeitungsparameter des ersten Parametersatzes über eine Hör-Applikation einstellbar sind, sind die Befehlsgeber aber bevorzugt durch Bedienelemente einer graphischen Nutzeroberfläche (Graphical User Interface, kurz: GUI) gebildet, die beispielsweise entsprechenden elektromechanischen Bauteilen wie Schiebereglern oder Drehköpfen nachempfunden sind.

Das erfindungsgemäße Hörsystem umfasst ein Hörinstrument und ein Peripheriegerät oder ein auf einem Datenverarbeitungsgerät lauffähiges Steuerprogramm ("Hör-Applikation"). Das Hörinstrument umfasst dabei zumindest ein Mikrofon zur Erfassung eines Mikrofonsignals, eine Signalverarbeitung zur Verarbeitung des erfassten Mikrofonsignals in Anhängigkeit vorgegebener Signalverarbeitungsparameter und ein Eigenstimmerkennungsmodul zur Untersuchung des Mikrofonsignals auf Eigenstimmanteile des Nutzers.

Das Hörsystem ist allgemein zur Durchführung des vorstehend beschriebenen erfindungsgemäßen Verfahrens eingerichtet. Konkret ist die Signalverarbeitung des Hörinstruments ist dazu eingerichtet, das Mikrofonsignal wie vorstehend beschriebenen in Abhängigkeit von der Erkennung oder Nicht-Erkennung von Eigenstimmanteilen in dem Mikrofonsignal nach Maßgabe eines ersten bzw. zweiten Parametersatzes der Signalverarbeitungsparameter zu verarbeiten.

Erfindungsgemäß ist der erste Parametersatz über das Peripheriegerät oder die Hör-Applikation änderbar, um die in dem Mikrofonsignal enthaltenen Eigenstimmanteile an eine von ihm gewünschte Wahrnehmung der eigenen Stimme anzupassen. Das Perpheriegerät bzw. die Hör-Applikation weisen insbesondere mindestens ein Bedienelement auf, das diese nutzerseitige Änderung des ersten Parametersatzes ermöglicht.

Die Signalverarbeitung erfolgt vorzugsweise in dem Hörinstrument und dort beispielsweise in einem Digitalen Signalprozessor (DSP). Dieser Signalprozessor umfasst in einer vorteilhaften Ausführungsform ein programmierbares Modul wie zum Beispiel einen Mikroprozessor, in dem die Funktionalität der Signalverarbeitung oder ein Teil davon in Form einer Software implementiert ist. Zusätzlich oder alternativ hierzu umfasst der Signalprozessor in vorteilhafter Ausführung eine nicht-programmierbare Einheit wie z.B. einen ASIC, in dem die Funktionalität der Signalverarbeitung oder ein Teil davon in Form von Hardware-Schaltkreisen implementiert ist.

Grundsätzlich ist im Rahmen der Erfindung aber auch denkbar, dass das Peripheriegerät des Hörsystems oder die Hör-Applikation zur Durchführung der Signalverarbeitung oder eines Teil derselben eingerichtet sind.

Alle einzelnen Ausführungsformen und Varianten des erfindungsgemäßen Verfahren korrespondieren mit entsprechenden Ausführungsformen und Varianten des erfindungsgemäßen Hörsystems und umgekehrt. Die für das erfindungsgemäße Verfahren beschriebenen Vorteile der einzelnen Ausführungsformen sind daher auf entsprechende Ausführungsformen des erfindungsgemäßen Hörsystems sinngemäß übertragbar.

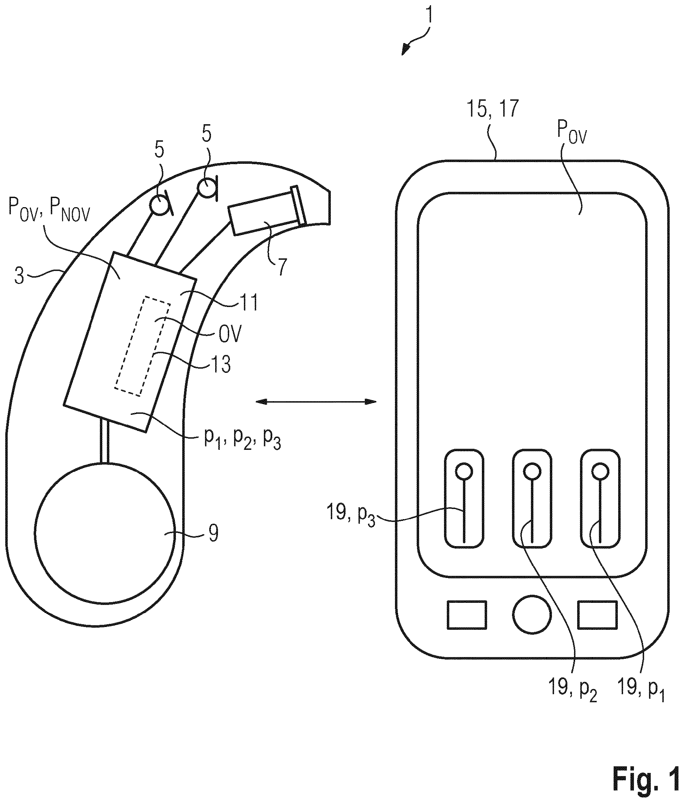

Nachfolgend werden Ausführungsbeispiele der Erfindung anhand einer Zeichnung näher erläutert. In der einzigen Figur (Fig. 1) ist in schematischer Darstellung ein Hörsystem 1 mit einem als Hörgerät 3 ausgebildeten Hörinstrument gezeigt. Das Hörgerät 3, das hier beispielhaft als BTE-Gerät ausgebildet ist und entsprechend hinter dem Ohr eines Nutzers getragen wird, umfasst zwei Mikrofone 5, einen Hörer 7 und eine Batterie 9. Weiter umfasst das Hörgerät 3 eine Signalverarbeitung 11 mit einem Eigenstimmerkennungsmodul 13. Die Signalverarbeitung 11 ist insbesondere durch einen Digitalen Signalprozessor (DSP) gebildet, der als programmierbares elektronisches Bauteil gebildet ist oder ein solches zumindest umfasst. Das Eigenstimmerkennungsmodul 13 ist hier vorzugsweise durch ein in dem DSP implementiertes Softwaremodul gebildet.

Im Betrieb des Hörgeräts 3 wird von den Mikrophonen 5 ein Schallsignal aus der Umgebung des Hörgeräts 3 aufgenommen und in Form eines Audiosignals (also eines elektrischen Signals, dass eine Schallinformation transportiert) an die Signalverarbeitung 11 abgegeben. Dieses Audiosignal ist nachfolgend als Mikrofonsignal bezeichnet. In der Signalverarbeitung 11 wird das Mikrofonsignal mittels einer Mehrzahl von Signalverarbeitungsalgorithmen modifiziert. Insbesondere umfasst die Signalverarbeitung 11 dabei vorzugsweise mehrere hintereinandergeschaltete, teils frequenzselektive und andernteils frequenzunabhängige Verstärkerstufen zur Verstärkung des Mikrofonsignals, die unabhängig voneinander einstellbar sind. Die Signalverarbeitung 11 gibt ein modifiziertes Audiosignal an den Hörer 7 ab. Durch den Hörer 7 wird dieses modifizierte Audiosignal in ein Ausgangsschallsignal umgewandelt, das über einen (nicht dargestellten) Schallschlauch in den Gehörgang des Nutzers abgegeben wird.

Die Funktionsweise der in der Signalverarbeitung 11 implementierten Signalverarbeitungsalgorithmen wird durch eine Vielzahl von, insgesamt z.B. ca. 150, (Signalverarbeitungs-) Parametern p₁, p₂, p₃, ... näher bestimmt. Beispielsweise handelt es sich dabei bei
- dem Parameter p₁ um einen Gesamtverstärkungsfaktor, mit dem die allgemeine Lautstärke des Ausgangsschallsignals insgesamt, d.h. frequenzunabhängig, eingestellt wird,
- dem Parameter p₂ um eine "spektrale Balance", mit der - unter Konstanthaltung der Lautstärke des Ausgangsschallsignals - ein Verhältnis zwischen einem Verstärkungsfaktor für hochfrequente Anteile (Höhen) des Mikrofonsignals und einem Verstärkungsfaktor für niederfrequente Anteile (Tiefen) des Mikrofonsignals eingestellt wird, und mit dem somit die empfundene Höhe der Ausgangsschallsignals variierbar ist; der Parameter p₂ wird hierbei insbesondere auf die frequenzspezifischen Verstärkungsfaktoren einer größeren Anzahl von Frequenzbändern der Signalverarbeitung 11 umgerechnet (z.B. werden in einer exemplarischen Ausführung der Signalverarbeitung 11 mit 32 Frequenzbänder durch den Parameter p₂ die einzelnen Verstärkungsfaktoren der 16 niederfrequenten Frequenzbänder relativ den einzelnen Verstärkungsfaktoren der 16 hochfrequenten Frequenzbänder insgesamt erhöht oder erniedrigt),
- dem Parameter p₃ um eine "Härte-Stellgröße", mit der der Klang des Ausgangsschallsignals im Bezug auf die wahrgenommene "Härte" oder "Weichheit" eingestellt wird; der Parameter p₃ beeinflusst beispielsweise über eine vorgegebene mathematische Funktion den Wert der Zeitkonstanten der dynamischen Kompression; in einer einfachen, aber zweckmäßigen Ausführung werden die Zeitkonstanten proportional zu dem Wert des Parameters p₃ variiert (in diesem Fall ist der (Härte-)Parameter p₃ derart definiert, dass große Werte dieses Parameters p₃ einem harten Klang entsprechen, während kleine Werte dieses Parameters p₃ einem weichen Klang entsprechen).

In einem nicht näher dargestellten Speicher des Hörgeräts 3 sind zumindest ein erster Parametersatz P_{OV} und ein zweiter Parametersatz P_{NOV} hinterlegt, durch die die Signalverarbeitungsparameter p₁, p₂, p₃, ... alternativ zueinander mit unterschiedlichen Werten belegt werden können.

Im Betrieb des Hörgeräts 3 wird das Mikrofonsignal durch das Eigenstimmerkennungsmodul 13 auf Eigenstimmanteile des Nutzers untersucht. Das Eigenstimmerkennungsmodul 13 gibt dabei ein die Erkennung oder Nicht-Erkennung von Eigenstimmanteilen anzeigendes Signal OV aus. In Abhängigkeit dieses Signals OV wendet die Signalverarbeitung 11 einen der beiden Parametersätze P_{OV} und P_{NOV} an. Sofern das Signal OV die Erkennung von Eigenstimmanteilen anzeigt, wendet die Signalverarbeitung 11 den ersten Parametersatz P_{OV} an, so dass die Signalverarbeitungsalgorithmen der Signalverarbeitung 11 mit den Werten dieses ersten Parametersatzes P_{OV} parametriert werden. Andernfalls, wenn also das Signal OV die Nicht-Erkennung von Eigenstimmanteilen anzeigt, wendet die Signalverarbeitung 11 den zweiten Parametersatz P_{NOV} an, so dass die Signalverarbeitungsalgorithmen der Signalverarbeitung 11 mit den Werten des zweiten Parametersatzes P_{NOV} parametriert werden.

Die Signalverarbeitung 11 verarbeitet das Mikrofonsignal somit, wenn der Nutzer spricht, anders als in Zeitintervallen, in denen das Mikrofonsignal keine Eigenstimmanteile enthält. Der Parametersatz P_{OV} beschreibt dabei einen bestimmten Punkt in einem dreidimensionalen - nämlich von den Parametern p₁, p₂ und p₃ aufgespannten - Parameterraum, in dem sich
- durch Variation des Werts des Parameters p₁ die Lautstärke der eigenen Stimme,
- durch Variation des Werts des Parameters p₂ die Höhe der Stimmlage der eigenen Stimme, und
- durch Variation des Werts des Parameters p₃ die Klangfarbe (d.h. die empfundene Härte oder Weichheit des Klangs) der eigenen Stimme

im Ausgangsschallsignal unabhängig voneinander variieren lassen.

Zusätzlich zu dem Hörgerät 3 umfasst das Hörsystem 1 ein Steuerprogramm zur Steuerung des Hörgeräts 3, das in seiner bestimmungsgemäßen Anwendung auf einem (selbst nicht zu dem Hörsystem 1 gehörenden) Smartphone 15 des Nutzers lauffähig installiert ist. Das Steuerprogramm ist nachfolgend als Hör-Applikation 17 bezeichnet.

Das Smartphone 15 ist über eine drahtlose Datenübertragungsverbindung, z.B. auf Basis des Bluetooth-Standards, mit dem Hörgerät 3 gekoppelt, so dass die Hör-Applikation 17 unter Zugriff auf eine Sende-Empfangseinheit (insbesondere einen Bluetooth-Transceiver) des Smartphones 15 mit dem Hörgerät 3 bidirektional Daten austauschen kann. Die Hör-Applikation 17 umfasst weiterhin eine graphische Nutzeroberfläche (GUI), die auf einem Bildschirm des Smartphones 15 anzeigbar ist.

Durch die Hör-Applikation 17 wird unter anderem eine Kopie des Parametersatzes P_{OV} verwaltet, die durch die Hör-Applikation 17 in einem Speicher des Smartphones 15 abgelegt wird. Die graphische Nutzeroberfläche umfasst hierbei eine Anzahl von als graphische Symbole anzeigbaren Bedienelementen, über die der Nutzer die in dem Smartphone 4 hinterlegte Kopie des Parametersatzes P_{OV} ändern kann. Grundsätzlich sind Ausführungsformen der Erfindung denkbar, bei denen der Nutzer alle Parameterwerte des Parametersatzes P_{OV} ändern kann. In vereinfachten und daher für nicht-fachmännische Nutzer besser handhabbaren Ausführungsformen ist die Hör-Applikation 17 aber bevorzugt derart gestaltet, dass sie nur die Veränderung eines einzigen Parameterwertes oder die Veränderung einer Mehrzahl von ausgewählten Parameterwerten des ersten Parametersatzes P_{OV} ermöglicht. In einer vorteilhaften Ausführungsform lässt die Hör-Applikation 17 hierbei nur die Veränderung der in dem Parametersatz P_{OV} enthaltenen Werte der Parameter p₁, p₂ und p₃ zu.

Die graphische Nutzeroberfläche der Hör-Applikation 17 enthält hierzu drei Reglern 19, die in Fig. 1 beispielhaft als Schieberegler (Slider) dargestellt sind.

Wenn der Nutzer durch Betätigung eines der Regler 19 den Wert des entsprechenden Parameters p₁, p₂ oder p₃ ändert, wird die in dem Smartphone 15 hinterlegte Kopie des Parametersatzes P_{OV} durch die Hör-Applikation 17 entsprechend mit dem geänderten Parameterwert aktualisiert. Des Weiteren übermittelt die Hör-Applikation 17 den aktualisierten Parametersatz P_{OV} auch über die drahtlose Datenübertragungsverbindung an das Hörgerät 3, wo der aktualisierte Parametersatz P_{OV} ebenfalls abgespeichert wird und somit in Zeitintervallen mit Eigenstimmanteilen die künftige Signalverarbeitung bestimmt. Auf diese Weise kann der Nutzer den Klang der durch das Hörgerät 3 vermittelten eigenen Stimme selbst jederzeit und flexibel an die gewünschte Wahrnehmung anpassen. Die von dem Nutzer vorgenommenen Änderungen bleiben dabei auf die Zeiträume beschränkt, in denen der Nutzer selbst spricht. Sie beeinflussen damit nicht die Signalverarbeitung des Hörgeräts 3 in Zeitintervallen ohne Eigenstimmanteile. Somit kann der Nutzer insbesondere auch nicht versehentlich das durch das Hörgerät 3 ermöglichte Sprachverständnis (also die Verständlichkeit der durch das Hörgerät 3 aufbereiteten Sprache fremder Sprecher) verschlechtern.

Die Erfindung wird anhand des vorstehend beschriebenen Ausführungsbeispiels besonders deutlich, ist auf dieses Ausführungsbeispiel gleichwohl aber nicht beschränkt. Vielmehr können weitere Ausführungsformen der Erfindung aus den Ansprüchen und der vorstehenden Beschreibung abgeleitet werden.

So ist in einer Variante des dargestellten Ausführungsbeispiels anstelle der separaten Regler 19 für die Veränderung der Werte der Parameter p₂ und p₃ eine zweidimensionale Regelfläche vorgesehen, auf der bestimmte p₂- und p₃-Werte als Maß für die Klangqualität simultan ausgewählt werden können.

In einer weiteren Variante des dargestellten Ausführungsbeispiels enthält der Parametersatz P_{OV} nicht Werte für alle Signalverarbeitungsparameter des Hörgeräts 3, sondern lediglich Werte für die ausgewählten Parameter p₁,p₂,p₃, die von dem Nutzer über die Hör-Applikation 17 veränderbar sind. Entsprechend werden in dieser Variante nur diese veränderbaren Parameterwerte zwischen der Hör-Applikation 17 und dem Hörgerät 3 ausgetauscht. Werte für weitere Signalverarbeitungsparameter sind in diesem Fall separat in dem Hörgerät 3 abgespeichert.

In wiederum weiteren Ausführungsformen der Erfindung sind Bedienelemente zur Veränderung des ersten Parametersatzes P_{OV} (als Teil einer graphischen Nutzeroberfläche oder in Form von elektromechanischen Befehlsgebern) in einem gegebenenfalls vorhandenen Peripheriegerät des Hörsystems 1 wie z.B. einer Fernbedienung enthalten.

### Bezugszeichenliste

- 1: Hörsystem
- 3: Hörgerät
- 5: Mikrofon
- 7: Hörer
- 9: Batterie
- 11: Signalverarbeitung
- 13: Eigenstimmerkennungsmodul
- 15: Smartphone
- 17: Hör-Applikation
- 19: Regler

- p₁: (Signalverarbeitungs-)Parameter
- p₂: (Signalverarbeitungs-)Parameter
- p₃: (Signalverarbeitungs-)Parameter
- OV: Signal
- P_{OV}: (erster) Parametersatz
- P_{NOV}: (zweiter) Parametersatz

## Patentansprüche

1. Verfahren zur Verarbeitung eines Mikrofonsignals in einem Hörsystem (1), das ein in oder am Ohr eines Nutzers tragbares Hörinstrument (3) sowie ein Peripheriegerät oder ein auf einem Datenverarbeitungsgerät (15) lauffähiges Steuerprogramm (17) umfasst,
- wobei das Mikrofonsignal von dem Hörinstrument (3) erfasst wird,
- wobei das erfasste Mikrofonsignal mittels einer Signalverarbeitung (11) in Abhängigkeit vorgegebener Signalverarbeitungsparameter (p_{1;} p₂, p₃) verarbeitet wird,
- wobei das erfasste Mikrofonsignal automatisch auf Eigenstimmanteile des Nutzers untersucht wird,
- wobei das Mikrofonsignal bei Erkennung von Eigenstimmanteilen nach Maßgabe eines ersten Parametersatzes (P_{OV}) der Signalverarbeitungsparameter (p₁, p₂, p₃) und bei Nicht-Erkennung von Eigenstimmanteilen nach Maßgabe mindestens eines zweiten Parametersatzes (P_{NOV}) der Signalverarbeitungsparameter (p₁, p₂, p₃) verarbeitet wird, und
- wobei der erste Parametersatz (P_{OV}) von dem Nutzer über das Peripheriegerät bzw. das Steuerprogramm (17) veränderbar ist, um die in dem Mikrofonsignal enthaltenen Eigenstimmanteile an eine von dem Nutzer gewünschte Wahrnehmung der eigenen Stimme anzupassen.

2. Verfahren nach Anspruch 1,
wobei der erste Parametersatz (P_{OV})
- einen Wert für einen Parameter (p₁) zur Anpassung einer frequenzunabhängige Verstärkung des Mikrofonsignals und/oder
- einen Wert für einen Parameter zur Anpassung einer Kennlinie einer dynamischen Kompression
umfasst, wobei diese Werte von dem Nutzer änderbar sind, um die wahrgenommene Lautstärke der eigenen Stimme anzupassen.

3. Verfahren nach Anspruch 1 oder 2,
wobei der erste Parametersatz (P_{OV})
- jeweils einen zugeordneten Wert für eine Anzahl von frequenzspezifischen Verstärkungsfaktoren für das Mikrofonsignal und/oder
- einen Wert für einen Parameter (p₂), mit dem die Verstärkung hochfrequenter Anteile des Mikrofonsignals und die Verstärkung niederfrequenter Anteile des Mikrofonsignals relativ zueinander änderbar sind, umfasst, wobei diese Werte von dem Nutzer änderbar sind, um die wahrgenommene Frequenzverteilung der eigenen Stimme anzupassen.

4. Verfahren nach einem der vorhergehenden Ansprüche,
wobei der erste Parametersatz (P_{OV}) einen Wert für einen Parameter (p₃) umfasst, wobei dieser Wert von dem Nutzer änderbar ist, um die wahrgenommene Härte oder Weichheit des Klangs der eigenen Stimme anzupassen.

5. Verfahren nach einem der vorhergehenden Ansprüche,
wobei das durch die Signalverarbeitung (11) verarbeitete Mikrofonsignal über das Hörinstrument (3) ausgegeben wird.

6. Hörsystem (1)
- mit einem Hörinstrument (3), das in oder an dem Ohr eines Nutzers tragbar ist, sowie
- mit einem Peripheriegerät oder mit einem auf einem Datenverarbeitungsgerät (15) lauffähigen Steuerprogramm (17),
wobei das Hörinstrument (3) zumindest ein Mikrofon (5) zur Erfassung eines Mikrofonsignals, eine Signalverarbeitung (11) zur Verarbeitung des erfassten Mikrofonsignals in Abhängigkeit vorgegebener Signalverarbeitungsparameter (p₁, p₂, p₃) und ein Eigenstimmerkennungsmodul (13) zur Untersuchung des Mikrofonsignals auf Eigenstimmanteile des Nutzers umfasst, wobei die Signalverarbeitung (11) dazu eingerichtet ist, die Verarbeitung des Mikrofonsignals
- bei Erkennung von Eigenstimmanteilen nach Maßgabe eines ersten Parametersatzes (P_{OV}) der Signalverarbeitungsparameter (p₁, p₂, p₃) und
- bei Nicht-Erkennung von Eigenstimmanteilen nach Maßgabe mindestens eines zweiten Parametersatzes (P_{NOV}) der Signalverarbeitungsparameter (p₁, p₂, p₃)
durchzuführen, und wobei der erste Parametersatz (P_{OV}) von dem Nutzer mittels des Peripheriegerätes oder des Steuerprogrammes (17) veränderbar ist, um die in dem Mikrofonsignal enthaltenen Eigenstimmanteile an eine von dem Nutzer gewünschte Wahrnehmung der eigenen Stimme anzupassen.

7. Hörsystem nach Anspruch 6,
umfassend einen Hörer (7) zur Ausgabe des durch die Signalverarbeitung (11) verarbeiteten Mikrofonsignals.
